# EUROPEAN PATENT SPECIFICATION

(11) **EP 0 583 509 B1**
(45) Date of publication and mention of the grant of the patent: **19.03.1997**
(21) Application number: 92122047.1
(22) Date of filing: 28.12.1992
(51) Int. Cl.: B01F 3/04

(54) **Enhanced gas dissolution**
Erhöhte Gasauflösung
Dissolution augmentée de gaz

(30) Priority: 17.08.1992 US 927711
(43) Date of publication of application: 23.02.1994
(73) Proprietor: PRAXAIR TECHNOLOGY, INC., Danbury, CT 06810-5113 (US)
(72) Inventor: Bergman, Thomas John, Jr., Monroe New York 10950 (US); Kingsley, Jeffrey Paul, Newburgh, New York 12550 (US); Kirby, Mark Herbert, Ridgefield, Ct. 06877 (US); Adis, Mitchell, North White Plains, New York 10603 (US); Coppola, Victor Alexander, Stamford, Ct. 06902 (US)
(74) Representative: Schwan, Gerhard, Dipl.-Ing.

(56) References cited:
- WO-A-86/05123
- FR-A- 1 534 745
- GB-A- 1 428 349
- US-A- 2 194 037
- US-A- 4 045 336
- US-A- 4 545 907

## Description

### Background of the Invention

Field of the Invention - This invention relates to the dissolution of gases in liquids. More particularly, it relates to the oxygenation of large bodies of water.

Description of the Prior Art - Liquid waste destruction is commonly achieved at low cost by slurry-phase biotreatment processes in lagoons, surface impoundments and large tanks. In such processes, biological organisms, which may be either indigenous to the waste body or seeded therein from an external source, consume toxic, organic contaminants present in the waste body and convert them to less harmful substances.

For such biotreatment purposes, aerobic organisms are most commonly employed because, in general, they destroy organic contaminants much faster than anaerobic organisms. It will be appreciated that oxygen must be supplied to such processes in order to maintain a high contaminant destruction rate.

Surface aeration is a common oxygen supply method that can be used in slurry phase biotreatment operations. Such surface aeration is disclosed in the Haegeman patent, U.S. 4,468,358. In this approach, water is pumped from a waste body into the air for the entrainment and dissolution of oxygen therein. An effective oxygen transfer efficiency of approximately 1.16-1.58 kg/kWh (1.9-2.6 lb/hp-hr) can be achieved thereby. Surface aeration methods can cause severe foaming and, because they promote intimate contact between the waste material and the surrounding air, result in very high, undesirable organic chemical air emissions.

Air sparing is another common method for supplying oxygen to waste bodies for such biotreatment purposes. However, conventional air spargers typically result in the dissolution of only 5-10% of the oxygen injected into waste bodies thereby. Thus, for example, approximately 1416-2832 dm³/minute (50-100 scfm) of air must be injected into the waste bodies in order to dissolve 28.3 dm³/minute (1 scfm) oxygen. In addition, air sparging can cause unacceptable levels of organic chemical emissions as a result of the stripping action of waste oxygen and nitrogen on volatile compounds, when present in the waste bodies being treated. Severe foaming can also occur during air sparing operations.

If air is replaced by pure oxygen for biotreatment purposes, a much smaller feed gas volume is required to achieve the same dissolved oxygen level achieved by air sparging, and greatly reduced air emission levels result. However, most of the injected pure oxygen must be dissolved for such processing to be economical. In addition, the composition of any off gas must be outside the flammability limits of organic chemicals contained in the lagoon or other body of waste liquid.

Slurry phase biotreatment has been practiced, in a so-called Mixflo™ approach, by pumping a side stream slurry from a tank or lagoon and injecting pure oxygen therein. The resulting two phase mixture is then passed through a pipeline contactor where approximately 60% of the injected oxygen dissolves. The thus-oxygenated slurry and the remaining undissolved oxygen are then re-injected into the tank or lagoon by passage through liquid/liquid eductors. About 75% of the undissolved oxygen remaining at the eductor inlet is thereby dissolved, resulting in the overall dissolution of 90% of the injected oxygen. The pumping power required for this application is relatively high, i.e., having an effective oxygen transfer efficiency of about 1.22 kg/kWh (2 lb/hp-hr).

The UNOX® Process is a surface aeration process using a pure oxygen-containing headspace. An effective oxygen transfer efficiency of 3.95-4.38 kg/kWh (6.5-7.2 lb/hp-hr) can be achieved using this process and system. This approach can cause severe foaming, and waste liquid must be pumped from a large tank or lagoon to an external tank reactor, treated therein, and returned to said large tank or lagoon. It is thus subject to appreciable pumping costs.

Two other approaches that likewise are carried out in covered, confined tank systems, are the Advanced Gas Reactor (AGR) and Liquid Organic Reactor (LOR) processes and systems of Praxair, Inc. The AGR process and system, covered by the Litz patent, U.S. Re. 32,562, uses a helical screw impeller/draft tube assembly in a reactor to enhance the dissolution of oxygen from an overhead gas space. As the impeller turns, slurry is pumped through the draft tube so as to create, together with baffles positioned at the top of the draft tube, vortices in the pumped liquid, resulting in the entrainment of gas from the reactor headspace. Any gas not dissolved in a single pass through the draft tube is recirculated to the headspace and recycled. The AGR approach has an effective transfer efficiency of approximately 6.08 kg/kWh (10 lb/hp-hr) (standard transfer efficiency of 10.3-10.9 kg/kWh (17-18 lb/hp-hr), and results in the dissolution of nearly 100% of the oxygen introduced into the system. It also ingests and destroys foam upon its passage through the draft tube.

The LOR process and system, covered by the Litz et al. patent, U.S. 4,900,480, is designed to safely dissolve oxygen in organic chemical-containing liquids. In certain embodiments, a horizontal baffle is positioned above the impeller/draft tube so as to provide a quiescent zone of liquid above the zone intended for gas-liquid mixing. Oxygen is injected directly into the impeller zone at a rate sufficient to sustain a high reaction rate, but low enough to maintain the oxygen level below the flammability limits of organic reactor contents. The LOR approach, like the AGR, consumes less power per pound of oxygen dissolved than pumping systems, the effective transfer efficiency of the LOR being approximately 6.08 kg/kWh (10 lb/hp-hr).

Both the AGR and LOR approaches are carried out in covered, confined tank systems. Because of the tank requirements thereof and because of the additional foaming problems associated with the UNOX approach referred to above, further improvements in oxygen dissolution are desired in the art. Such improvements, in particular, are desired in light of the high power requirements associated with MIXFLO.

An arrangement for the dissolution of gas in a large body of liquid comprising the features defined in the preamble of claim 1 is known from GB-A-1 428 349. This arrangement consists of a floating device in which a propeller is used to pump water downward through a draft tube having a discharge opening at the bottom thereof. The floating device further comprises aspirator nozzles having a downwardly facing outlet opening mounted on the draft tube at a level near the underside of the propeller used to pump the liquid downward. Conduit means are used to pass fluid to the aspirator nozzles as to pass the fluid under suction into the aspirator nozzles for mixing with the fluid being pumped to the propeller. The mixing apparatus is buoyantly supported in the body of liquid by an annular float having an outer shell. Liquid from below the float is drawn in through intake head and pumped downward at high velocity through draft tube and past aspirator nozzles to draw gas therefrom for introduction into the stream of water being pumped by the propeller for mixture into the surrounding body of liquid. An outer cone is attached to the lower end of the draft tube to define an outwardly and downwardly extending discharge passageway, so that the water pumped by the propeller is discharged downwardly and outwardly.

US-A-4 545 907 relates to the interior structure of an aeration tank used for waste water purification. The aeration tank has a mixing vessel provided with water-jet aeration columns having a starting zone having inlets for waste water and activated sludge and an end zone having a sludge outlet communicating with a sludge separator. Water-jet aeration columns are installed in the starting zone of the mixing vessel. Each column has a converging inlet portion and a diverging outlet portion having a perforated hood containing holes. Each column is positioned so as to define, with the bottom of mixing vessel, a circulation slot. The columns are positioned within the mixing vessel. A gas-trapping isolating casing has its free end immersed in the sludge medium to isolate the inlet portion from outside air.

FR-A-1 534 745 discloses an arrangement for the dissolution of gas in a body of liquid, the arrangement comprising baffle means, a conduit for introducing a feed gas stream beneath the baffle means at the bottom of the arrangement into the liquid, and an impeller means driven by the buoyancy of feed gas bubbles rising bottom of the arrangement to the surface of the body of liquid.

It is an object of the invention, therefore, to provide an improved approach to the dissolution of oxygen in liquids.

It is another object of the invention to provide a system for the efficient dissolution of oxygen in large liquid bodies.

With these and other objects in mind, the invention is hereinafter described in detail, the novel features thereof being particularly pointed out in the appended claims.

### Summary of the Invention

The above objects are accomplished by an arrangement for the dissolution of gas in a large body of liquid as defined in claim 1.

The impeller or an impeller/draft tube assembly is covered by the baffle means. These two elements are either supported or floated in a large liquid body. Gas, such as oxygen or carbon dioxide, is injected under the baffle and is ingested into the suction of the impeller. The system is employed without a confining outer tank for the liquid. Liquid rich in dissolved gas and any undissolved gas are discharged from the bottom of the draft tube. The undissolved gas floats toward the surface and is recovered by said baffle means for recirculation to the impeller or impeller/draft tube assembly. The liquid with dissolved gas distributes into the large liquid body.

### Brief Description of the Drawing

The invention is hereinafter described with reference to the accompanying drawings in which:
Fig. 1 is a schematic flow diagram of an embodiment of the invention, positioned in a lagoon or other large body of liquid;
Fig. 2 is a plot of the radial gas distribution profiles at the top and bottom of a particular draft tube embodiment of the invention; and
Fig. 3 is a plot showing the oxygen transfer efficiency per unit horsepower at various liquid levels in the in-situ oxygenator system of the invention.

### Detailed Description of the Invention

The objects of the invention are accomplished by employing an efficient oxygenation system positioned in a lagoon or other large body of liquid. The system comprises downward pumping impeller means or an impeller/draft tube assembly positioned in said body of liquid, without a confining outer tank, and covered by a horizontal baffle or hood supported or floated in said body of liquid. Gas, such as oxygen, is injected into the body of liquid, as in the AGR or LOR approaches, with said gas being injected under the horizontal baffle or hood adapted to trap escaping undissolved gas. The gas is ingested, by the downward pumping impeller suction, into the downwardly passing liquid stream in the draft tube, for enhanced dissolution therein. The thus-gasified liquid, and any undissolved gas, are discharged from the bottom of the draft tube. While reference is made below to oxygen for convenience in describing the invention, it will be understood that oxygen is an illustrative example of the gases that can be dissolved in a large body of liquid in the practice of the invention.

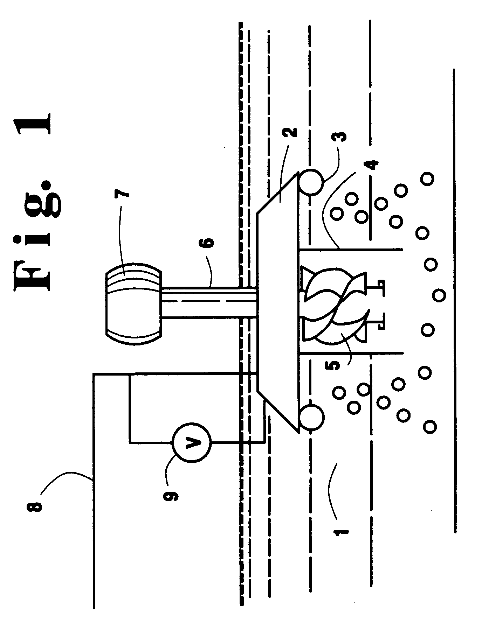

As shown in Fig. 1 of the drawings, a large body of liquid, e.g., a lake, surface impoundment, tank, pond, lagoon or the like, is represented by the numeral 1 in which baffle means 2, conveniently horizontally positioned and commonly somewhat conical in shape, is positioned, as by floats 3. Hollow draft tube 4 is positioned under said baffle means 2 and has impeller means 5 located therein. Said impeller means 5 is driven by drive shaft 6 that extends upward above the water level of said body of liquid 1 and is driven by drive motor 7. Oxygen is injected into the body of liquid through line 8 adapted to inject the oxygen preferably under, or in the proximity of, baffle means 2 so as to be ingested into the suction of impeller means 5. Pressure tap 9 is provided so that the liquid level under baffle means 2 can be determined.

Oxygenated liquid and any undissolved oxygen are discharged from the bottom of draft tube 4. Oxygenated liquid passing from the draft is not recycled to the upper part of the draft tube for passage through impeller means 5, as in AGR and LOR systems, because of the absence of a confining outer tank in operation within a lagoon or other body of liquid 1. In such large liquid body applications, it is undesirable for the discharged liquid to recirculate to the impeller suction. If liquid discharging from the bottom of the draft tube were to recycle to the suction at the upper end of the draft tube, the dissolved oxygen would not readily disperse outward into the bulk liquid in the lagoon. Consequently, liquid in the impeller's zone of influence would have a very high dissolved oxygen level, and liquid away from this zone would be oxygen starved.

Any oxygen not dissolved in the liquid upon passing through the impeller zone in the draft tube rises close to the draft tube wall, e.g., in flow pattern due to its buoyancy, is captured by conical-horizontal baffle means 2, and is channelled back into impeller means 5 within draft tube 4. The conical baffle is desirably adapted and is sufficiently wide to capture most of the undissolved oxygen, resulting in essentially 100% oxygen utilization in the practice of the invention. The oxygenated liquid discharged from the bottom of draft tube 4 flows outward into the body of liquid in flow pattern so that the dissolved oxygen is readily dispersed throughout the body of liquid 1.

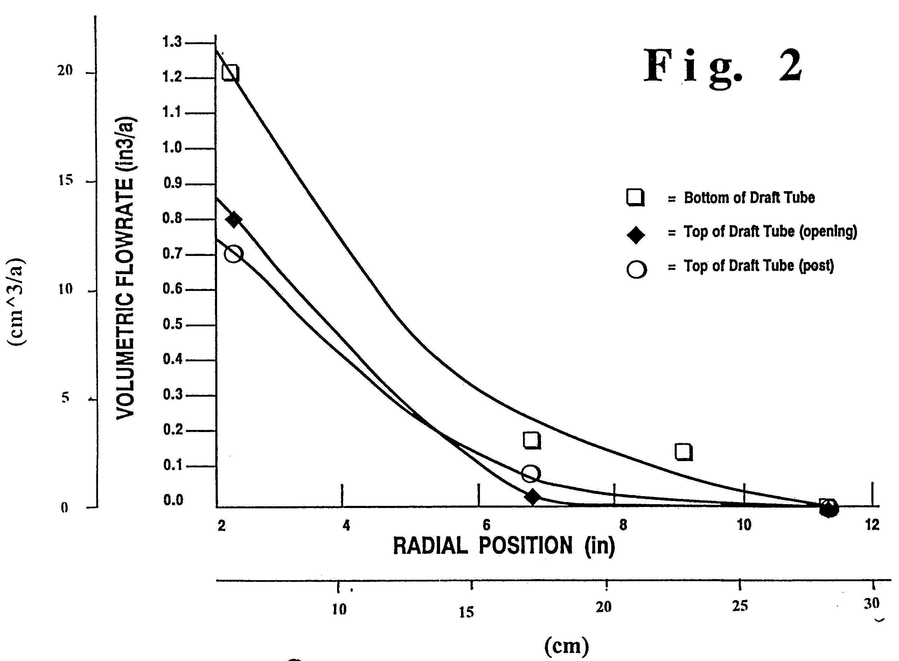

Radial gas distribution profiles were measured for a 76 mm (3") diameter impeller means positioned in a hollow draft tube in embodiments of the invention. The results were as shown in Fig. 2 of the drawing in which the volumetric gas flowrate was plotted against radial position at the bottom of the draft tube, the top of the draft tube at the opening thereof and at the post opening thereof. The results demonstrated that the conical baffle size required to capture essentially 100% of the undissolved oxygen is relatively small. This is because of the absence of a reactor tank floor which, if present, would tend to enhance the radial dispersion of undissolved oxygen striking the tank floor. If a 610 mm (24") diameter impeller were employed in an oxygenator operating, in the practice of the invention, at 290 RPM, a 1830 mm (72") diameter baffle would be sufficient to capture essentially all of the undissolved oxygen rising in flow pattern 10 close to the outside of draft tube 4, consistent with the Fig. 2 results showing that most of the undissolved oxygen exists at a short radial distance from the draft tube.

The standard oxygen transfer efficiency of the in-situ oxygenator of the invention was found to be 11.86 kg/kWh (19.5 lb/hp-hr), which is equivalent to the standard efficiency of an AGR system and much higher than the transfer efficiency associated with sidestream pumping and surface aeration operations.

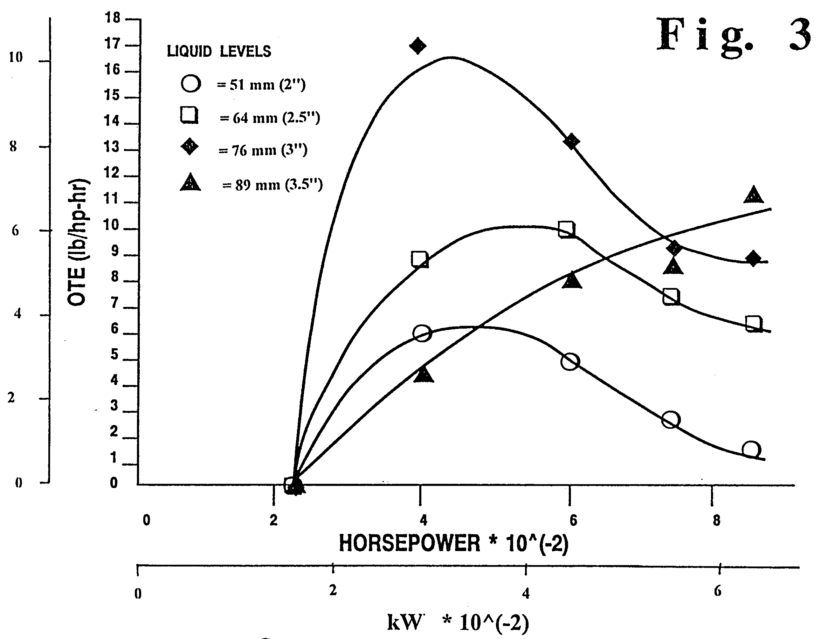

It should be noted that the maintenance of a constant liquid level under the conical baffle can strongly impact the volume of oxygen dissolved per unit horsepower. Thus is indicated by the plot, in Fig. 3 of the drawing, of the oxygen transfer efficiency at various horsepower expenditure levels. It is desirable, in the practice of the invention, to have the liquid level monitored and maintained, e.g., on the basis of the pressure under the conical baffle. As the amount of gas under the baffle increases, the pressure under the baffle increases. The liquid level may be controlled, therefore, by increasing the oxygen injection rate if the pressure under the baffle falls below a predetermined set point, and by decreasing the oxygen injection rate if the pressure under the baffle exceeds the set point.

The oxygenation of the invention may also be used to control solids suspension in the liquid. The velocity and axial gas distribution characteristics of the oxygenator can be used to predict the solids suspension level achievable, or to avoid solids suspension altogether. This is a highly desirable aspect of the practice of the invention because, in biotreatment, too high a solids suspension level can poison the bacteria that consume organic contaminants in the body of liquid being treated.

Since the invention employs an impeller positioned in a draft tube, as in the AGR and LOR approaches, it is a foam consumer, thus eliminating the foaming concerns associated with the surface aeration approach. In addition, since organic chemicals are not sprayed into a gaseous headspace, organic stripping is minimal.

Those skilled in the art will appreciate that the invention can be used for the dissolution of from 21%, i.e. air, up to 100%, i.e., pure air, assuming that the headspace under the horizontal baffle is vented to remove excess nitrogen. The invention can also be used to dissolve other gases, such as hydrogen, if so desired for particular water treatment purposes, or for the treatment of other liquids, e.g., organic liquids.

In addition to the biotreatment purposes referred to above, the in-situ oxygenator of the invention may be used to supply oxygen for municipal and industrial waste water treatment, fish farming and other applications involving a large body of water or other liquid.

It will be appreciated that various other changes and modifications can be made in the details of the invention without departing from the scope of the invention as recited in the appended claims. Thus, the baffle means employed is preferably a somewhat conical-shaped-horizontal baffle of sufficient width or size to capture most of the undissolved gas, but a variety of other baffle types and shapes may be positioned above or preferably below the surface of the liquid so long as they are adapted to capture and funnel most of the undissolved oxygen or other injected gas into the draft tube section of the gas dissolution system of the invention. For example, a plastic bubble or a flexible balloon canopy can be inflated by the use of a convenient injection device that can add as much gas as desired to the headspace under the canopy. Furthermore, the impeller means are desirably helical, axial flow, down pumping impeller means adapted to facilitate the downward flow of a gas-liquid mixture in the draft tube, but any suitable down-flowing impellers, such as a Lightnin A315® or Aire-O₂ Turbo®-mixer can be employed to create the desired downward flow in the draft tube. It will be understood that the impeller means may also include additional features, such as a radial flow impeller means connected to the drive shaft to create a high shear zone in the draft tube to further enhance the dissolution of gas in the liquid.

The invention has been described above and illustrated with reference to a hollow draft tube, e.g. hollow draft tube 4 of Fig. 1, as in the AGR and LOR approaches referred to herein. It should be noted that it is within the scope of the invention to employ embodiments thereof in which the hollow draft tube is not employed. In such embodiments, the downward pumping impeller means is nevertheless positioned, with respect to the baffle means, so that the baffle means captures most of any undissolved gas that floats to the surface of the liquid following its downward passage, together with liquid rich in dissolved gas, under the downward pumping influence of the impeller means. The use of a draft tube is nevertheless desirable for many applications in enabling power to be efficiently utilized, so that it is not necessary to pump as much liquid as otherwise required, and in precluding undue mixing of solids with the portion of the body of liquid being treated. It will be understood that, in the practice of the various embodiments of the invention, additional baffle means can be provided in the overall system to facilitate the flow of gas and liquid as herein disclosed for the desired gas dissolution purposes of the invention.

From the description and examples above, it will be appreciated that the invention represents a desirable advance in the gas dissolution art as it pertains to the treatment of large bodies of liquid. The invention is particularly advantageous in the safe and efficient dissolution of oxygen in large bodies of liquids in industries such as biotreatment and wastewater treatment. By enabling such treatments to be carried out in-situ and at relatively low pumping power requirements, the invention enhances the technical and economic feasibility of gas dissolution operations in a variety of practical and important industrial processing operations.

## Claims

1. Arrangement for the dissolution of gas in a large body of liquid (1) comprising:
a) the large body of liquid (1):
b) means receiving said large body of liquid; and
c) an apparatus comprising
c1) impeller means (5) driven by a drive motor (7) and positioned below the surface of the large body of liquid at a sufficient distance from walls delimiting the large body of liquid (1) that liquid discharged from the impeller means is not recycled to the impeller suction, and adapted to cause the passage of a gas-liquid mixture downwardly in said large body of liquid; and
c2) conduit means (8) for introducing a feed gas stream beneath said baffle means (2) so that bubbles of the gas are caused by the suction of said impeller means (5) to pass with liquid, as a gas-liquid mixture, downward in said large body of liquid,
**characterized by**
c3) baffle means (2) positioned over said impeller means (5) and of sufficient size to capture essentially 100 % of the undissolved gas that separates from a liquid rich in dissolved gas and floats to the surface of said large body of liquid for recirculation to said impeller means; and
c4) means to monitor and control the liquid level under said baffle means (2) for maintaining a constant liquid level under the baffle means;
whereby the liquid rich in dissolved gas, because of the absence of container vessel walls, is dispersed into the large body of liquid, while undissolved gas, due to its buoyancy, floats to the surface of said large body of liquid and is captured for recirculation, resulting in essentially complete utilization of the feed gas stream.

2. The arrangement of claim 1 and including means (3) to float or support said baffle means (2).

3. The arrangement of claim 1 in which said baffle means (2) comprise a flexible balloon canopy.

4. The arrangement of claim 1 in which said baffle means (2) comprise a plastic bubble.

5. The arrangement of claim 1 and including a hollow draft tube (4) submerged below the surface of said large body of liquid (1) and positioned under said baffle means (2), said hollow draft tube having open ends at the top and bottom thereof, said impeller means (5) being positioned within the hollow draft tube so that the gas-liquid mixture is caused to pass downward in said hollow draft tube for discharge from the bottom thereof

6. The arrangement of any one of the preceding claims in which said impeller means (5) comprises an axial flow, down-pumping impeller.

7. The arrangement of any one of the preceding claims and including means (9) for monitoring the pressure beneath said baffle means (2).

8. The arrangement of claim 6 in which said conduit means are adapted to introduce the feed gas stream directly into said large body of liquid (1) directly under the baffle means (2) or sufficiently close thereto for said feed gas stream being ingested into the suction of said impeller means (5).

## Patentansprüche

1. Anordnung zum Lösen von Gas in einem großen Flüssigkeitskörper (1) mit:
a) dem großen Flüssigkeitskörper (1);
b) einer Anordnung zum Aufnehmen des großen Flüssigkeitskörpers; und
c) einer Vorrichtung mit
c1) einer Laufradanordnung (5), die von einem Antriebsmotor (7) angetrieben ist, unterhalb der Flüssigkeitsoberfläche des großen Flüssigkeitskörpers in einem ausreichenden Abstand von den großen Flüssigkeitskörper (1) begrenzenden Wänden angeordnet ist, so daß von der Laufradanordnung ausgestoßene Flüssigkeit nicht zu dem Laufradansaugbereich umgewälzt wird, und die für die Erzeugung einer in dem großen Flüssigkeitskörper nach unten gerichteten Strömung eines Gas-Flüssigkeits-Gemischs ausgelegt ist; und
c2) einer Leitungsanordnung (8) zum Einleiten eines Einsatzgasstroms unterhalb einer Leitwandanordnung (2), so daß Blasen des Gases durch die Ansaugwirkung der Laufradanordnung (5) mit Flüssigkeit, als ein Gas-Flüssigkeits-Gemisch, in dem großen Flüssigkeitskörper nach unten getrieben werden
dadurch gekennzeichnet, daß
c3) die Leitwandanordnung (2) oberhalb der Laufradanordnung (5) angeordnet ist und eine ausreichende Größe aufweist, uni im wesentlichen 100% des ungelösten Gases einzufangen, welches sich von einer an gelöstem Gas reichen Flüssigkeit abtrennt und an die Oberfläche des großen Flüssigkeitskörpers aufsteigt, um zu der Laufradanordnung umgewälzt zu werden; und
c4) eine Anordnung zum Überwachen und Steuern des Flüssigkeitspegels unter der Leitwandanordnung (2) zur Aufrechterhaltung eines konstanten Flüssigkeitspegels unter der Leitwandanordnung vorgesehen ist;
wodurch die an gelöstem Gas reiche Flüssigkeit aufgrund des Fehlens von Behälterwänden in dem großen Flüssigkeitskörper verteilt wird, während nicht gelöstes Gas aufgrund seines Auftriebs zu der Oberfläche des großen Flüssigkeitskörpers aufsteigt und zwecks Umwälzung eingefangen wird, was zu einer im wesentlichen vollständigen Ausnutzung des Einsatzgasstroms führt.

2. Anordnung nach Anspruch 1, dadurch gekennzeichnet, daß eine Anordnung (3) vorgesehen ist, welche die Leitwandanordnung (2) zum Schweben bringt oder trägt.

3. Anordnung nach Anspruch 1, dadurch gekennzeichnet, daß die Leitwandanordnung (2) einen flexiblen ballonartigen Baldachin aufweist.

4. Anordnung nach Anspruch 1, dadurch gekennzeichnet, daß die Leitwandanordnung (2) eine Kunststoffkuppel aufweist.

5. Anordnung nach Anspruch 1, dadurch gekennzeichnet, daß ein hohles Leitrohr (4) vorgesehen ist, welches unter die Flüssigkeitsoberfläche des großen Flüssigkeitskörpers (1) eingetaucht ist und unter der Leitwandanordnung (2) angeordnet ist, wobei das hohle Leitrohr an seiner Oberseite und seiner Unterseite jeweils ein offenes Ende aufweist und die Laufradanordnung (5) innerhalb des hohlen Leitrohrs angeordnet ist, so daß das Gas-Flüssigkeits-Gemisch in dem hohlen Leitrohr nach unten geleitet wird, um an dessen Unterseite ausgestoßen zu werden.

6. Anordnung nach einem der vorhergehenden Ansprüche, dadurch gekennzeichnet, daß die Laufradanordnung (5) ein nach unten pumpendes Axialstrom-Laufrad aufweist.

7. Anordnung nach einem der vorhergehenden Ansprüche, dadurch gekennzeichnet, daß eine Anordnung (9) zum Überwachen des Drucks unter der Leitwandanordnung (2) vorgesehen ist.

8. Anordnung nach Anspruch 6, dadurch gekennzeichnet, daß die Leitungsanordnung ausgelegt ist, um den Einsatzgasstrom direkt in den großen Flüssigkeitskörper (1) direkt unter der Leitwandanordnung (2) oder hinreichend nahe zu dieser einzubringen, so daß der Einsatzgasstrom in den Ansaugbereich der Laufradanordnung (5) aufgenommen wird.

## Revendications

1. Dispositif pour la dissolution de gaz dans une masse importante de liquide (1) comprenant :
a) la masse importante de liquide (1) ;
b) des moyens pour recevoir cette masse importante de liquide ; et
c) un appareil comprenant
c1) un moyen à hélice (5) entraîné par un moteur d'entraînement (7) et disposé au-dessous de la surface de la masse importante de liquide à une distance des parois délimitant la masse importante de liquide (1) suffisante pour que le liquide évacué du moyen à hélice ne soit pas recyclé dans l'aspiration de l'hélice, et conçu pour provoquer le passage d'un mélange gaz-liquide vers le bas dans cette masse importante de liquide ; et
c2) un moyen de conduite (8) pour introduire un courant de gaz d'alimentation au-dessous de moyen de chicane (2) de telle sorte que des bulles du gaz soient amenées par l'aspiration de ce moyen à hélice (5) à descendre avec le liquide, sous forme de mélange gaz-liquide, dans cette masse importante de liquide,
caractérisé par
c3) un moyen de chicane (2) disposé au-dessus de ce moyen à hélice (5) et d'une taille suffisante pour capturer pratiquement 100 % du gaz non dissous qui se sépare d'un liquide riche en gaz dissous et monte vers la surface de cette masse importante de liquide pour une remise en circulation dans ce moyen à hélice ; et
c4) un moyen pour surveiller et régler le niveau du liquide sous ce moyen de chicane (2) pour maintenir un niveau de liquide constant sous le moyen de chicane ;
grâce à quoi le liquide riche en gaz dissous, en raison de l'absence de parois de récipient le contenant, est dispersé dans la masse importante de liquide, alors que le gaz non dissous, en raison de sa flottabilité, monte à la surface de cette masse importante de liquide et est capturé pour une remise en circulation, ce qui conduit à une utilisation pratiquement complète du courant de gaz d'alimentation.

2. Dispositif selon la revendication 1, et contenant un moyen (3) pour faire flotter ou supporter ce moyen de chicane (2).

3. Dispositif selon la revendication 1, dans lequel ce moyen de chicane (2) comprend une protection constituée par un ballon souple.

4. Dispositif selon la revendication 1, dans lequel ce moyen de chicane (2) comprend une bulle plastique.

5. Dispositif selon la revendication 1 et contenant un aspirateur-diffuseur creux (4) immergé au-dessous de la surface de cette masse importante de liquide (1) et disposé sous ce moyen de chicane (2), cet aspirateur-diffuseur creux ayant des extrémités ouvertes à son sommet et à sa base, ce moyen à hélice (5) étant disposé dans l'aspirateur-diffuseur creux de telle sorte que le mélange gaz-liquide soit amené à descendre dans cet aspirateur-diffuseur creux pour être évacué du bas de celui-ci.

6. Dispositif selon l'une quelconque des revendications précédentes, dans lequel ce moyen à hélice (5) comprend une hélice à écoulement axial, pompant vers le bas.

7. Dispositif selon l'une quelconque des revendications précédentes et comprenant un moyen (9) pour surveiller la pression au-dessous de ce moyen de chicane (2).

8. Dispositif selon la revendication 6, dans lequel ce moyen de conduite est conçu pour introduire le courant de gaz d'alimentation directement dans cette masse importante de liquide (1) juste au-dessous du moyen de chicane (2) ou suffisamment près de celui-ci pour que ce courant de gaz d'alimentation soit introduit dans l'aspiration de ce moyen à hélice (5).
